# EUROPÄISCHE PATENTSCHRIFT

(11) **EP 0 866 639 B1**
(45) Veröffentlichungstag und Bekanntmachung des Hinweises auf die Patenterteilung: **25.04.2001**
(21) Anmeldenummer: 98102827.7
(22) Anmeldetag: 18.02.1998
(51) Int. Cl.: H05B 3/28, H05B 3/84, G02B 5/08, A47G 1/00

(54) **Widerstands-Heizvorrichtung für flächige Objekte, insbesondere für Spiegel**
Resistance heating circuit for plane objects, especially for mirrors
Chauffage ohmique pour les objects plats, en particulier pour miroirs

(30) Priorität: 19.03.1997 DE 19711522
(43) Veröffentlichungstag der Anmeldung: 23.09.1998
(73) Patentinhaber: Winter, Josef, 85296 Rohrbach (DE)
(72) Erfinder: Winter, Josef, 85296 Rohrbach (DE)
(74) Vertreter: Winter, Brandl, Fürniss, Hübner, Röss, Kaiser, Polte Partnerschaft

(56) Entgegenhaltungen:
- GB-A- 2 263 556
- US-A- 4 634 242
- US-A- 5 408 069
- PATENT ABSTRACTS OF JAPAN vol. 097, no. 005, 30.Mai 1997 & JP 09 000405 A (TATSUGUCHI KOGYO GLASS KK), 7.Januar 1997,
- PATENT ABSTRACTS OF JAPAN vol. 097, no. 003, 31.März 1997 & JP 08 306472 A (SHIROO YUKIO), 22.November 1996,

## Beschreibung

Die Erfindung betrifft eine Widerstands-Heizvorrichtung für flächige Objekte, insbesondere für Spiegel gemäß Anspruch 1.

In Badezimmern beschlagen nach dem Duschen oder Baden häufig die vergleichsweise kalten Spiegelflächen, so daß diese Spiegelflächen ihre Funktion nicht mehr erfüllen. Um dieses Beschlagen zu vermeiden, ist es bekannt, die Spiegelflächen von hinten mittels flächigen Widerstandsheizungen zu erwärmen, so daß die Spiegelflächen auch bei hoher Luftfeuchtigkeit nicht beschlagen. Diese Heizvorrichtungen sind bisher jedoch auf das Ausland beschränkt, da der deutsche TÜV sehr hohe Sicherheitsanforderungen stellt. Für Spiegelheizungen heißt das insbesondere, daß die stromführenden Elemente, d.h. auch die Heizelemente durch drei voneinander getrennte isolierende Schichten gesichert sein müssen. Das Einbetten beispielsweise einer mäanderförmigen Widerstandsheizung zwischen drei voneinander getrennte isolierenden Schichten zu beiden Seiten, führt jedoch zu einem vergleichsweise dicken Aufbau, was wiederum eine reduzierte Heizwirkung zur Folge hat. Die große Bauhöhe und die reduzierte Heizwirkungen haben dazu geführt, daß sich derartige flächige Heizvorrichtungen insbesondere für Spiegel nicht durchgesetzt haben.

Aus der Druckschrift US 5 408 069 ist eine Widerstandsheizvorrichtung für flächige Elemente bekannt, bei der auf der einen Seite der eigentlichen Heizschicht drei isolierende bzw. abschirmende und auf der anderen Seite zwei isolierende bzw. reflektierende Schichten vorgesehen sind.

Diese Druckschrift offenbart somit folgende Schichtenfolge: Reflektionsschicht, Isolierschicht, Heizfolie, Isolierschicht, elektrische Abschirmung und Isolierschicht. Die einzelnen Schichten sind dabei mittels eines passenden Klebemittels miteinander verbunden.

Aus der Druckschrift US 5 380 981 ist ebenfalls eine elektrische Widerstandsheizvorrichtung für Spiegel bekannt, bei der mehrere Schichten in einer bestimmten Reihenfolge, nämlich Papier, Klebeschicht, Isolierschicht, Klebeschicht, Alufolie, Klebeschicht, Heizschicht und Kunststoffschaum aneinander gefügt sind.

Aus der Druckschrift DE 81 02 846 U1 ist eine Widerstands-heizvorrichtung für Spiegel im Kfz-Bereich mit folgendem Aufbau bekannt: Spiegelhalterung; Abdeckpapier; in ein Doppelklebeband eingedrückter Heizdraht, der in direktem Kontakt mit dem Spiegelglas steht; Spiegelglas. Auch aus der Druckschrift DE-GM 1 986 611 ist eine Widerstandsheizvorrichtung für Spiegel im Kfz-Bereich mit einem vergleichbaren Aufbau bekannt: Isolationsschicht, Doppelklebeband mit eingedrücktem Heizdraht, Metall- bzw. Schutzlackschicht, Spiegelglas. Da in beiden letztgenannten Fällen ein Heizdraht in eine der beiden Klebeschichten des Doppelklebebandes eingebettet wird, muß zumindest diese Klebeschicht vergleichsweise dick sein.

Es ist daher Aufgabe der vorliegenden Erfindung eine Widerstands-Heizvorrichtung für flächige Objekte anzugeben, die sich durch geringe Bauhöhe auszeichnet und dennoch die Sicherheitsanforderungen des deutschen Technischen Überwachungsvereins erfüllt.

Die Lösung dieser Aufgabe erfolgt durch die Merkmale des Anspruchs 1.

Durch die Verwendung von mehreren doppelseitigen Klebebändern mit einer zwischen zwei Klebeschichten angeordneten Zwischenschicht aus isolierendem Material wird einerseits eine Isolationsschicht mit ausreichend hoher Durchbruchsspannung bereitgestellt und andererseits geht kaum Bauhöhe verloren, da die doppelseitigen Klebebänder sowohl Halte- bzw. Klebefunktion als auch die Funktion einer Isolationsschicht übernehmen. Durch die räumliche Integration von Klebung und Isolation ergibt sich eine wesentlich geringere Bauhöhe und folglich ausreichende Wärmeeinkoppelung an das flächige Objekt, z.B. an einen Badezimmerspiegel und gleichzeitig sind die Sicherheitsanforderungen des TÜV erfüllt.

Gemäß einer vorteilhaften Ausgestaltung der Erfindung ist die flächige Widerstandsheizung mittels Zuleitungen unmittelbar mit dem Stromnetz (230 Volt) bzw. einer Stromquelle verbindbar. D. h. die Widerstandsheizung wird entsprechend der jeweils vorgesehenen Betriebsspannung - 230 Volt, 12 Volt, 24 Volt usw. - dimensioniert und ausgelegt. Die Widerstandsheizung kann somit unmittelbar mit der jeweiligen Stromquelle verbunden werden und erbringt die gewünschte Heizleistung. Irgendwelche Regelungsvorrichtungen sind daher nicht nötig, so daß eine sehr kostengünstige Ausführung vorliegt.

Da die Luftfeuchtigkeit und die Temperturverhältnisse im Badezimmer nicht immer so sind, daß es zu einem Beschlagen des Spiegels führt, ist gemäß einer vorteilhaften Ausgestaltung der Erfindung ein EIN/AUS-Schalter in der Zuleitung vorgesehen. Damit läßt sich die Speigelheizung je nach Bedarf einschalten.

Gemäß einer weiteren vorteilhaften Ausgestaltung der Erfindung ist ein Temperatur- und/oder Feuchtefühler vorgesehen, mittels denen die Spiegelheizungen bei Erreichen entsprechender Schwellwerte ein- oder ausgeschaltet werden. Die Temperatur- und Feuchtefühler können dabei unmittelbar in bzw. auf der Spiegelfläche oder in der Nähe des Speigels angeordnet sein.

Gemäß einer besonders vorteilhaften Weiterbildung der Erfindung ist die zweite Klebeschicht des zweiten doppelseitigen Klebebandes mit einer abziehbaren Schutzfolie bedeckt, so daß die erfindungsgemäße Heizvorrichtung vor dem Anbringen an dem Spiegel verpackt, versandt oder in sontiger Weise handhabbar ist.

Weitere Einzelheiten, Merkmale und Vorteile der Erfindung ergeben sich aus der nachfolgenden Beschreibung einer bevorzugten Ausführungsform anhand der Zeichnung.

Es zeigt:
Fig. 1 eine Schnittdarstellung durch die Schichtenfolge einer beispielhaften Ausführungsform der Erfindung,
Fig. 2 eine Aufsicht auf die Widerstandsheizung bei einem runden Spiegel und
Fig. 3 eine Aufsicht auf die Widerstandsheizung bei einem rechteckigen Spiegel.

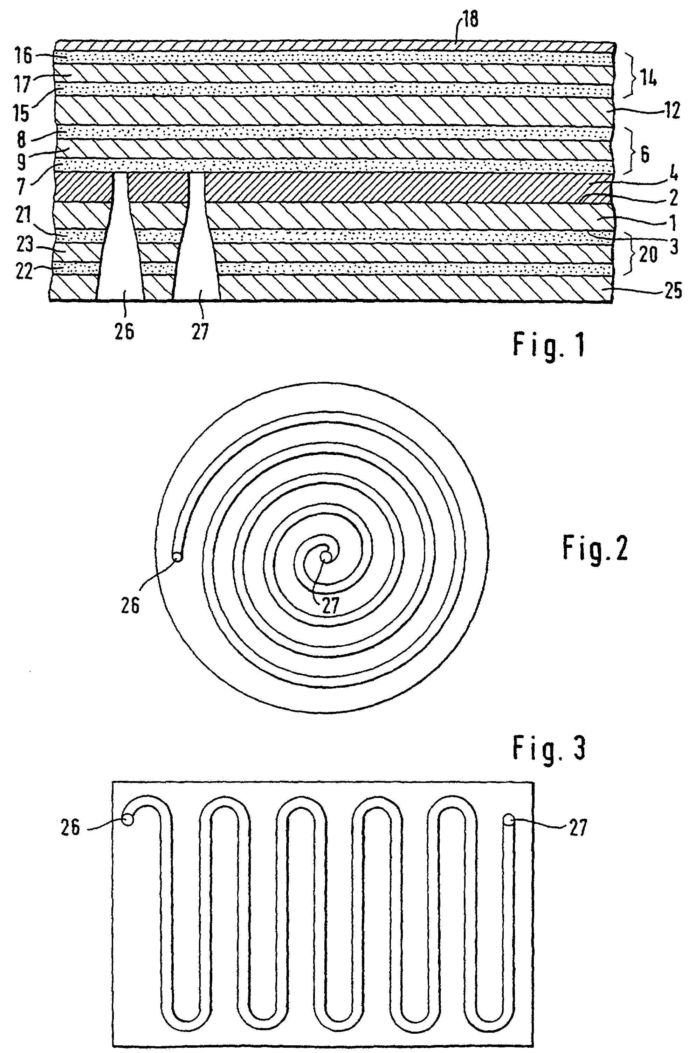

Fig. 1 zeigt einen Schnitt durch eine beispielhafte Ausführungsform der Erfindung. Ein elektrisch isolierendes Substrat 1 weist eine erste Hauptoberfläche 2 und zweite Hauptoberfläche 3 auf. Auf der ersten Hauptoberfläche 2 des Substrats 1 ist eine flächige Widerstandsheizungsschicht 4 aus einem Material mit einem bestimmten spezifischen elektrischen Widerstand aufgebracht. Die Widerstandsheizungsschicht 4 wird durch ein erstes doppelseitiges Klebeband 6 mit einer ersten und einer zweiten Klebeschicht 7 bzw. 8 sowie einer isolierenden Zwischenschicht 9 bedeckt. Hierbei kontaktiert die erste Klebeschicht 7 die Widerstandsheizungsschicht 4. Die zweite Klebeschicht 8 des ersten doppelseitigen Klebebands 6 ist mit einer Seite einer ersten Isolationsschicht 12 verbunden. Die andere Seite der Isolationsschicht 12 ist mit einem zweiten doppelseitigen Klebeband 14 mit einer ersten und einer zweiten Klebeschicht 15 bzw. 16 und einer isolierenden Zwischenschicht 17 verbunden. Hierbei kontaktiert die erste Klebeschicht 15 die erste Isolationsschicht 12. Auf der zweiten Klebeschicht 16 des zweiten doppelseitigen Klebebands 14 ist eine abziehbare Schutzfolie 18 angeordnet. Die zweite Hauptoberfläche 3 des elektrisch isolierenden Substrats 1 ist mit einem dritten doppelseitigen Klebeband 20 verbunden, das ebenfalls eine erste und eine zweite Klebeschicht 21 bzw. 22 und eine isolierende Zwischenschicht 23 aufweist. Hierbei ist die erste Klebeschicht 21 mit der zweiten Hauptoberfläche 3 verbunden und die zweite Klebeschicht 22 ist mit einer zweiten Isolationsschicht 25 verbunden. Von der zweiten Isolationsschicht 25 her durchsetzen elektrische Anschlußstellen 26 und 27 die zweite Isolationsschicht 25 das dritte doppelseitige Klebeband 20 und das Substrat 1 und kontaktieren die entsprechenden Anschlüsse an die Widerstandsheizungsschicht 4.

Die erfindungsgemäße Widerstandsheizung gemäß Fig. 1 kann unmittelbar nach ihrer Herstellung mit dem zu beheizenden Objekt bzw. Spiegel verbunden werden, so daß ein entsprechender Spiegel mit Widerstandsheizung auf dem Markt kommt. Durch die Schutzfolie 18 ist jedoch auch eine Nachrüstung bereits vorhandener Badezimmer- und Waschraumspiegel möglich. Da mit der dreifachen Isolationsschicht nach beiden Seiten die einschlägigen TÜV-Vorschriften erfüllt sind, kann die erfindungsgemäße Widerstandsheizung auch in Baumärkten an Nichtfachleute, d.h. unmittelbar an den Endverbraucher verkauft werden. Die erfindungsgemäße Widerstandsheizung ist vorzugsweise so ausgelegt, daß sie über silikonisolierte Zuleitungen (nicht dargestellt) unmittelbar mit dem Stromnetz im Haushalt verbindbar ist. Der Anschluß kann hierbei über eine entsprechende Verteilerdose oder mittels einem Normstecker erfolgen.

Fig. 2 zeigt eine runde Ausgestaltung der erfindungsgemäßen Widerstandsheizung, wobei die Heizelemente der Widerstandsheizungsschicht 4 spiralförmig ausgebildet sind. Fig. 3 zeigt eine rechteckige Ausbildung der Widerstandsheizung, d.h. für rechteckige Spiegel. Hierbei sind die Heizelemente der Widerstandsheizung 4 meanderförmig angeordnet. Die mäanderförmige Ausgestaltung der Widerstandsheizung 4 läßt sich auch auf die runde Spiegelform anwenden und die spiralförmige Ausgestaltung läßt sich auch auf echteckige und anders geformte Speigel anwenden.

Bei den Klebeschichten der doppelseitigen Klebebänder 6, 14 und 20 handelt es sich vorzugsweise um Acrylatkleber, sythetischen Kautschuk oder Naturkautschuk. Das elektrisch isolierende Substrat 1, die ersten und zweiten Isolationsschichten 12 und 25 und bei den Zwischenschichten 9, 17 und 23 der doppelseitigen Klebebänder 6, 14 und 20 handelt es sich um flexible Kunststoffolien mit einer Dicke im Bereich von 0,008 bis 0,09 mm. Die elektrische Durchschlagsfestigkeit der einzelnen isolierenden Schichten beträgt mindestens 2000 Volt. Die Widerstandsheizungsschicht 4 besteht aus einem elektrisch leitenden Material mit einem bestimmten spezifischen elektrischen Widerstand. Die nötige Heizleistung wird bei gegebener Versorgungsspannung, 230 V, 24 Volt, 12 Volt, usw. durch eine entsprechende Dimensionierung der Heizelemente erreicht. Das Material der Heizelemente besteht beispielsweise aus Kupfer, Silber, Aluminium oder anderen leitenden Legierungen und Substanzen. Bei den Heizelementen kann es sich auch um PTC-Elemente handeln, d.h. um Elemente aus einem Material mit einem positiven Widerstandsthemperaturkoeffizienten. Damit ist eine zusätzliche Sicherheit gegeben, da PTC-Elemente selbstregelnd sind.

## Patentansprüche

1. Widerstands-Heizvorrichtung für flächige Objekte, insbesondere für Spiegel, mit
einem flächigen, elektrisch isolierenden Substrat (1) mit einer ersten und einer gegenüberliegenden zweiten Hauptoberfläche (2, 3),
einer auf der ersten Hauptoberfläche (2) des Substrats (1) angeordneten flächigen Widerstandsheizung (4) in Form von elektrischen Leiterelementen aus einem Widerstandsmaterial,
einem ersten doppelseitigen Klebeband (6) mit einer ersten und zweiten Klebeschicht (7, 8) und einer zwischenschicht (9) aus elektrisch isolierendem Material, dessen erste Klebeschicht (7) mit der flächigen Widerstandsheizung (4) verbunden ist,
einer ersten Isolationsschicht (12), die mit der zweiten Klebeschicht (8) des ersten doppelseitigen Klebebandes (6) verbunden ist,
einem zweiten doppelseitigen Klebeband (14) mit einer ersten und zweiten Klebeschicht (15, 16) und einer Zwischenschicht (17) aus elektrisch isolierendem Material, dessen erste Klebeschicht (15) mit der ersten Isolationsschicht (12) verbunden ist und dessen zweite Klebeschicht (16) mit dem zu heizenden Objekt verbindbar ist,
einem dritten doppelseitigen Klebeband (20) mit einer ersten und zweiten Klebeschicht (21, 22) und einer Zwischenschicht (23) aus elektrisch isolierendem Material, dessen erste Klebeschicht (21) mit der zweiten Hauptoberfläche (3) des Substrats (1) verbunden ist, und
einer zweiten Isolationsschicht (25), die mit der zweiten Klebeschicht (22) des dritten doppelseitigen Klebebandes (20) verbunden ist.

2. Widerstands-Heizvorrichtung nach Anspruch 1, dadurch gekennzeichnet, daß die Widerstandsheizung (4) mittels Zuleitungen unmittelbar mit einer Stromquelle verbindbar ist.

3. Widerstands-Heizvorrichtung nach Anspruch 2, dadurch gekennzeichnet, daß die Zuleitungen silikonisoliert sind.

4. Widerstands-Heizvorrichtung nach Anspruch 2 oder 3, dadurch gekennzeichnet, daß in den Zuleitungen ein Ein/Aus-Schalter integriert ist.

5. Widerstands-Heizvorrichtung nach wenigstens einem der vorhergehenden Ansprüche, gekennzeichnet durch einen Feuchtefühler mit einer Steuervorrichtung zum Freigeben der elektrischen Verbindung zwischen Zuleitungen und Widerstandsheizung bei Vorliegen einer Feuchte über einem bestimmten Schwellenwert.

6. Widerstands-Heizvorrichtung nach wenigstens einem der vorhergehenden Ansprüche, gekennzeichnet durch einen Temperaturfühler mit einer Steuervorrichtung zum Freigeben der elektrischen Verbindung zwischen Zuleitungen und Widerstandsheizung bei Vorliegen einer Temperatur unter einem bestimmten Schwellenwert.

7. Widerstands-Heizvorrichtung nach wenigstens einem der vorhergehenden Ansprüche, dadurch gekennzeichnet, daß die zweite Klebeschicht (16) des zweiten doppelseitigen Klebebandes (14) durch eine Schutzfolie (25) abgedeckt ist.

## Claims

1. Resistance heating device for planar objects, in particular for mirrors, including
a planar, electrically insulating substrate (1) having opposite first and second major surfaces (2, 3),
planar resistance heating means (4) arranged on said first major surface (2) of said substrate (1) and having the form of electrical lead elements of a high-resistivity material,
a first two-sided adhesive tape (6) having first and second adhesive layers (7, 8) and an intermediate layer (9) of electrically insulating material, the first adhesive layer (7) of which is connected with said planar resistance heating means (4),
a first insulating layer (12) connected with said second adhesive layer (8) of said first two-sided adhesive tape (6),
a second two-sided adhesive tape (14) having first and second adhesive layers (15, 16) and an intermediate layer (17) of electrically insulating material, the first adhesive layer (15) of which is connected with said first insulating layer (12), and the second adhesive layer (16) of which is capable of being connected with the object to be heated,
a third two-sided adhesive tape (20) having first and second adhesive layers (21, 22) and an intermediate layer (23) of electrically insulating material, the first adhesive layer (21) of which is connected with said second major surface (3) of said substrate (1), and
a second insulating layer (25) connected with said second adhesive layer (22) of said third two-sided adhesive tape (20).

2. Resistance heating device in accordance with claim 1, characterised in that said resistance heating means (4) are capable of direct connection with a current source by means of supply lines.

3. Resistance heating device in accordance with claim 2, characterised in that said supply lines are silicone insulated.

4. Resistance heating device in accordance with claim 2 or 3, characterised in that an ON/OFF switch is integrated into said supply lines.

5. Resistance heating device in accordance with at least one of the preceding claims, characterised by a humidity sensor including control means for enabling the electrical connection between supply lines and resistance heating means in the presence of a humidity exceeding a specific threshold.

6. Resistance heating device in accordance with at least one of the preceding claims, characterised by a temperature sensor including control means for enabling the electrical connection between supply lines and resistance heating means in the presence of a temperature below a specific threshold.

7. Resistance heating device in accordance with at least one of the preceding claims, characterised in that said second adhesive layer (16) of said second two-sided adhesive tape (14) is covered by a protective film (25).

## Revendications

1. Dispositif de chauffage ohmique pour objects plans, en particulier pour miroirs, comprenant
un substrat plan isolant électriquement (1) comprenant première et deuxième surfaces majeures (2, 3) opposées,
un chauffage ohmique plan (4) disposée sur la première surface majeure (2) dudit substrat (1) et ayant la forme d'éléments conducteurs électriques en un matériau résistif,
un premier ruban adhésif double face (6) ayant première et deuxième couches adhésives (7, 8) et une couche intermédiaire (9) d'un matériau isolant électriquement dont la première couche adhésive (7) est reliée au chauffage ohmique plan (4),
une première couche isolante (12) reliée à la deuxième couche adhésive (8) du premier ruban adhésif double face (6),
un deuxième ruban adhésif double face (14) ayant première et deuxième couches adhésives (15, 16) et une couche intermédiaire (17) d'un matériau isolant électriquement, dont la première couche adhésive (15) est reliée à la première couche isolante (12) et dont ladite deuxième couche adhésive (16) peut être reliée à l'objet à chauffer,
un troisième ruban adhésif double face (20) ayant première et deuxième couches adhésives (21, 22) et une couche intermédiaire (23) d'un matériau isolant électriquement, dont la première couche adhésive (21) est reliée à la deuxième surface majeure (3) dudit substrat (1), et
une deuxième couche isolante (25) reliée à la deuxième couche adhésive (22) du troisième ruban adhésif double face (20).

2. Dispositif de chauffage ohmique selon la revendication 1, caracterisé en ce que le chauffage ohmique (4) peut être relié directement à une source de courant à moyen de lignes d'amenée.

3. Dispositif de chauffage ohmique selon la revendication 2, caracterisé en ce que les lignes d'amenée sont isolées au silicone.

4. Dispositif de chauffage ohmique selon la revendication 2 ou 3, caracterisé en ce qu'un disjoncteur à deux positions est intégré dans les lignes d'amenée.

5. Dispositif de chauffage ohmique selon l'une au moins des revendications précédentes, caractérisé par un capteur d'humidité avec un dispositif de commande pour libérer la connexion électrique entre lignes d'amenée et chauffage ohmique en présence d'une humidité supérieure à un seuil déterminé.

6. Dispositif de chauffage ohmique selon l'une au moins des revendications précédentes, caractérisé par un capteur de température avec un dispositif de commande pour libérer la connexion électrique entre lignes d'amenée et chauffage ohmique en présence d'une température inférieure à un seuil déterminé.

7. Dispositif de chauffage ohmique selon l'une au moins des revendications précédentes, caracterisé en ce que la deuxième couche adhésive (16) du deuxième ruban adhésif double face (14) est recouverte par un film protecteur (25).
